# EUROPEAN PATENT SPECIFICATION

(11) **EP 0 630 704 B1**
(45) Date of publication and mention of the grant of the patent: **13.01.1999**
(21) Application number: 94109669.5
(22) Date of filing: 22.06.1994
(51) Int. Cl.: B21D 53/04, B23P 15/26

(54) **Improved process and system for the production of elements for column radiators**
Verfahren und Anlage zur Herstellung von Elementen für Säulenheizkörper
Procédé et installation pour la fabrication des éléments de radiateur en forme de colonne

(30) Priority: 22.06.1993 IT BO930282; 22.06.1993 IT BO930285; 02.05.1994 IT BO940188
(43) Date of publication of application: 28.12.1994
(73) Proprietor: IRSAP SPA, 45031 ARQUA' POLESINE (IT)
(72) Inventor: Zen, Alessandro, I-45100 Rovigo (IT)
(74) Representative: Jorio, Paolo, Dr. Ing.

(56) References cited:
- EP-A- 0 324 226
- CH-A- 280 247
- DE-B- 2 510 303
- GB-A- 795 837
- GB-A- 1 034 167

## Description

The present invention relates to a process for the production of column radiator elements according to the preamble of claim 1 and, in particular, column radiators of the type comprising a plurality of elements each of which has two heads and at least two columns which connect the two heads together.

As described in the Swisse Patent n° 280247, on which the preamble of claim 1 is based, it is known to make the above-indicated elements by means of a process according to which each element is obtained starting from two hollow blanks made by stamping and each incorporating two half-heads, which are positioned over one another with their concave sides facing one another, and are connected together by spark welding in such a way as to obtain a hollow body comprising two heads and having a welding bead, which latter is removed in part by means of a shear device, and in part by means of a lapping machine.

Subsequently the said hollow body is cut transversely into two parts to obtain two heads which are again connected together by spark welding with the interposition of two or more tubular columns to form a said radiator element having, at each end of each column, a welding bead which is removed in part by a shear device and in part by means of a lapping machine.

The known process described above has numerous disadvantages.

In particular the use of spark welding makes it necessary that the bodies to be welded together have excess material at their respective edges to be joined so that the edges themselves can be brought to fusion temperature. During welding this excess material is partly sprayed away and partly enlarges the welding bead.

In essence the known process described above causes the production of a relatively high quantity of waste material constituted by the welding beads, which must be reduced by suitable shearing and lapping machines with the use of specialised labour.

At the completion of the known process described above, the radiator elements obtained still always have welding surplus in that, because of the relatively small working space, it is not normally possible to lap the parts of weld bead between adjacent columns.

As far as the previously-mentioned spark welding is concerned, it is suitable to raise the point that the excess material which is sprayed away during welding contaminates the welding machines which must therefore frequently be stopped for cleaning and maintenance. Finally, spark welding also involves the use of a large quantity of welding electrodes and heat fatiguing of the material to be welded.

From the above it will be immediately understood that a process such as the known process described above involves enormous investments both to produce a system having a relatively large number of machines of different types, and for the necessary space to house such machinery, as well as the necessary specialised personnel. It gives rise to relatively high production costs resulting from the energy necessary for spark welding, the number of electrodes consumed, and the waste material produced.

The object of the present invention is that of providing a process for the production of column-type radiator elements which will be free from the above-mentioned disadvantages. According to the present invention there is provided a process for the production of column radiator elements the said elements comprising two heads and a plurality of columns which connect the heads together in a watertight manner, the process comprising:
a stamping phase to produce first blanks by stamping , each one of which comprises at least a half-head having a first edge for connection to a corresponding first edge of another of the said blanks;
a connection step to produce a hollow body comprising at least one said head starting from two said first blanks assembled together; and
a first welding phase to connect two said heads to at least two said columns at respective opposite ends of the columns themselves, each head having a respective second edge for connecting to a corresponding respective end of each said column;
the said connection step comprising the first sub-phase of assembling together two said first blanks in counterposed positions by bringing the said respective first connection edges into coincide with each other; a second sub-phase of welding the said two first blanks along the first connection edges in contact with one another;
   characterised in that
said first welding phase and said second sub-phase of welding are two laser welding phases, and in that said first welding phase comprises the sub-phases of:
welding the said columns to the said two heads along a first half of each of the said second connecting edges by two laser welding tools on a first face of the said element; inverting the said element; welding the said columns to the said two heads by means of said laser welding tools on a second face of the said element and along a second half of each of the said second connecting edges.

Further, the present invention relates to a system for the production of column radiator elements which is defined in claim 3.

According to the present invention there is provided a system for the production of column radiator elements, each of the said elements being defined by two heads and a plurality of columns which mechanically and hydraulically connect the said heads together, the system comprising a first stamping station for producing first blanks each comprising at least a half-head and each provided with a first connecting edge for connecting to a corresponding first edge of another of said blanks; a second station comprising a coupling station for producing a second blank comprising a hollow body in turn including at least one said head starting from two said first blanks assembled together the said second station including means for bringing two said blanks disposed facing one another, into contact along the said respective first connecting edges; a third station for positioning two said heads in contact with respective said columns, each head having a respective second connecting edge for connecting to a corresponding respective end of each said column; a fourth welding station for welding the said two heads to the respective said columns, said fourth station comprising at least two laser welding stations and at least two laser energy generators each of which is operable to supply a respective laser welding tool coupled to one of the said generators and displaceable along the associated coupling edges; the said fourth station furthermore comprising an inverting station for inverting the said element to permit the said two welding tools to act first on one face and then on an opposite face of the said heads; and a fifth welding station for fixedly connecting together the said first connecting edges in contact with one another; the said fifth station being a laser welding station and comprising at least one respective laser energy generator and at least one respective laser welding tool coupled to the said generator and displaceable along the associated coupling edges.

Preferred embodiments of the invention are defined in the dependent claims.

The present invention will now be described with reference to the attached drawings which illustrate two embodiments thereof, in which:
Figures 1 and 2 partially illustrate, in block diagram form, respective parts of a first preferred embodiment of the system of the present invention;
Figure 3 is a side view of a radiator element made using the system of Figures 1 and 2;
Figure 4 illustrates on an enlarged scale a blank formed in the system of Figures 1 and 2;
Figure 5 partially illustrates in block diagram form a part of a second preferred embodiment of the system of the present invention; and
Figure 6 illustrates on an enlarged scale a blank formed with the system of Figure 5.

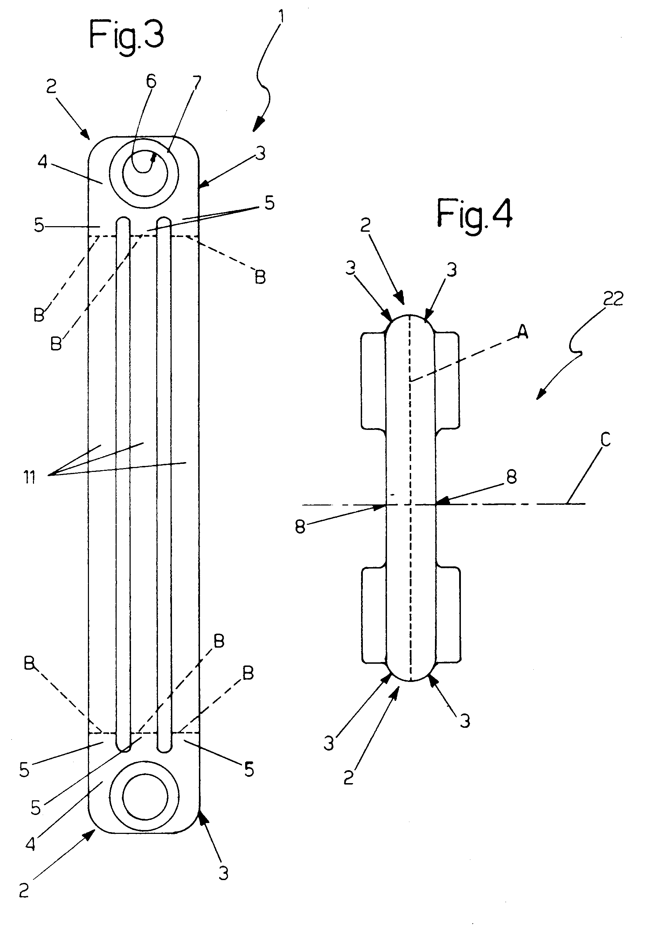

As illustrated in Figure 3 the reference numeral 1 generally indicates a metal element for known column radiators not illustrated. The element 1 has at opposite ends two identical heads 2. Each head 2 is formed by two half-heads 3 welded together along respective coupling edges A. Each half-head 3 is formed by a substantially rectangular plate 4 which on three contiguous sides has its perimetral edge folded in an arc in section. Along the fourth edge of the plate 4 are formed three parallel projections 5. The projections 5 have their ends curved in a circumferential arc in section in a manner such that each projection 5 has a semi-cylindrical shape. The plate 4 has a through-hole 6 around which, integrally with the plate 4, is formed a tubular sleeve 7 which allows hydraulic communication between adjacent elements 1 of the radiator. In summary each head 2 comprises a portion defined by the plates 4 of the two half-heads 3 welded together along the folded edges of the said three contiguous sides, and spigots 5a each of which is defined by a pair of projections 5 welded together and having a substantially circular end edge 5b.

In use, starting from a metal plate, a blank 8 (Figure 4) is made by stamping, this being defined by two half-heads 3 which have their plates 4 coplanar; the projections 5 of each half-head 3 are aligned with and integral with the projections 5 of the other half-head 3. The element 1 finally includes three columns 11 each of which is welded at each end and along a respective weld line B to the edge 5B of a respective spigot of a respective head 2.

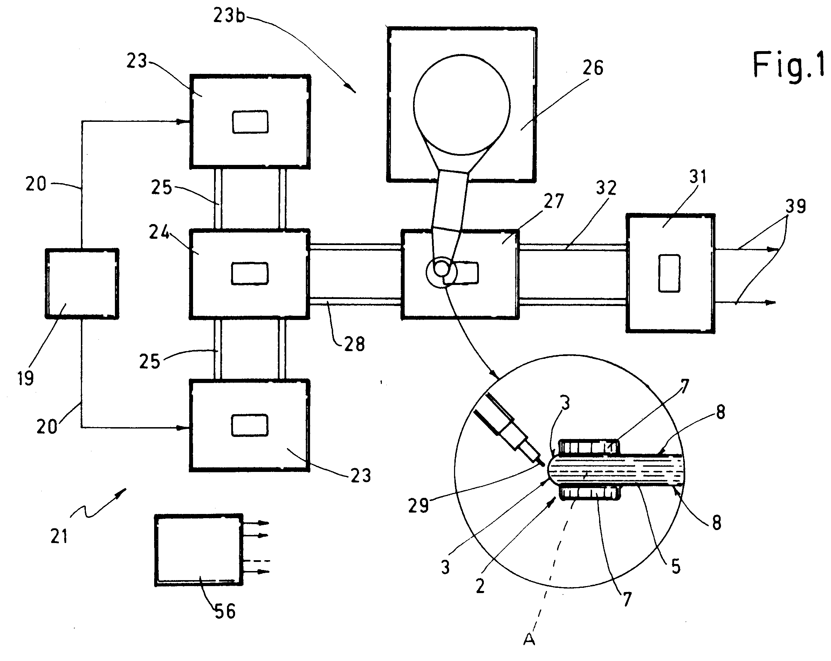

With reference to Figure 1 the reference numeral 21 indicates a first part of a system for the production of the radiator elements 1. In particular the part 21 of the system has the object of making a head 2 (Figure 4) defined by welding together two blanks 8.

The part 21 of the system comprises;
a stamping station 19 for producing the blanks 8; two magazines 23 for blanks 8;
conveyor devices 20 (schematically illustrated) for transporting blanks 8 to the two magazines 23.

The part 21 of the system further includes a station 23b in turn comprising:
a station 24 for bringing together two blanks 8, one supplied from the first magazine 23 and the other supplied from the second magazine 23;
conveyor devices 25 for conveying blanks 8 from the magazines 23 to the station 24;
a laser energy generator 26;
a laser welding station 27 in which a laser welding tool 29 welds along the lines A of two superimposed blanks 8;
a conveyor device 28 for conveying a body 22 defined by the superimposition of two blanks in the station 24 towards the welding station 27; and
a cutting station 31 for cutting the body 22 along a plane C in such a way as to define two heads 2.

The part 21 of the system finally includes a device 32 for conveying the body from the welding station 27 to the cutting station 31.

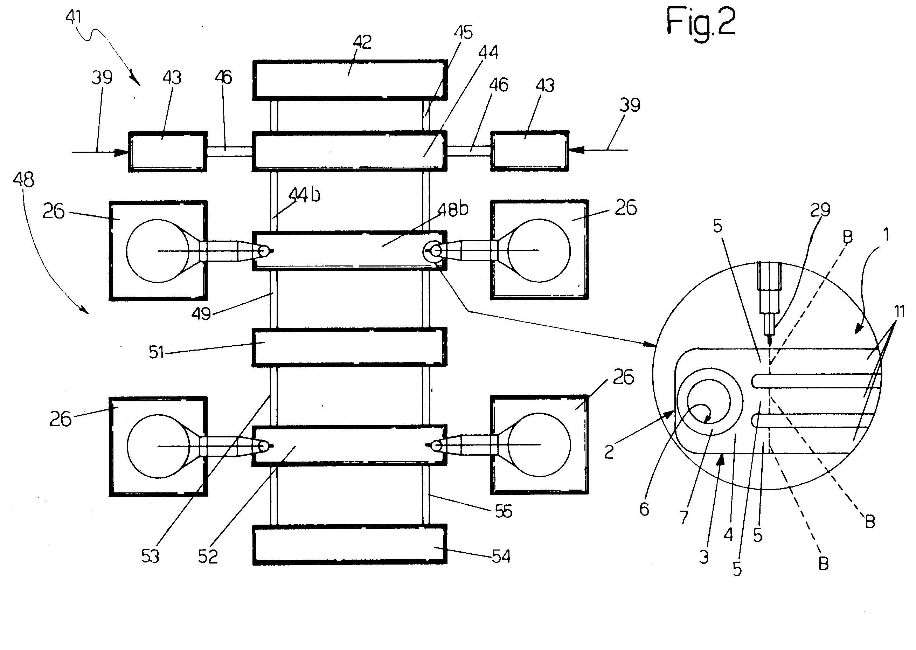

With reference to Figure 2, the reference numeral 41 indicates a second part of the system for the production of elements 1.

The part 41 of the system comprises:
a magazine 42 for columns 11;
two magazines 43 for heads 2 which have arrived from the part 21 of the system via schematically illustrated conveyor devices 39;
a station 44 for assembling three columns 11 and two heads 2, the columns being supplied from the magazine 42, one head 2 being supplied from the first of the magazines 43 and the other head 2 being supplied from the second of the magazines 43;
a conveyor device 45 for conveying columns 11 from the magazine 42 to the assembling station 44;
a conveyor device 46 for conveying heads 2 from the magazines 43 to the assembling 44;
a welding station 48;
a conveyor device 44b for conveying elements 1 from the assembling station 44 to the station 48;
a discharge station 54 for discharge of the finished elements 1; and
a conveyor device 55 for conveying the elements 1 from the station 48 to the station 54.

The station 48 comprises:
four further laser energy generators 26;
a laser welding station 48b in which two laser welding tools 29, each supplied by a respective generator 26, weld the columns 11 to the edges 5b of the spigots 5a of the two heads 2 on a first side of the element 1, along the lines B of Figure 3;
a station 51 in which the element 1 exiting from the station 48b is inverted;
a conveyor device 49 for conveying the element 1 from the station 48 to the station 51;
a laser welding station 52 in which two laser welding tools 29, each supplied by a respective generator 26 weld, on a second face of the element 1, along the lines B, the columns 11 to the edges 5b of the spigots 5a of the two heads 2;
a conveyor device 53 for conveying the element 1 from the station 51 to the station 52.

The installation finally includes an electronic central control unit 56 which manages the entire cycle of operation and in particular the various working stations and the workpiece conveying devices.

In use of the process according to the principles of the present invention the following phases take place in succession:
production of blanks 8 by stamping in the station 19;
supply of blanks 8 to the two magazines 23 by respective conveyor devices 20;
transfer of two blanks 8 from magazines 23 to the station 24 by respective conveyor devices 25;
assembly of two blanks 8 in the station 24;
transfer of two superimposed blanks 8 to a laser welding station 27 by the conveyor devices 28;
welding by means of the laser welding tool 29 along the lines A of two superimposed blanks 8;
transfer of the body 22 formed in the station 27 to the cutting station 31 by conveyor device 32;
cutting the body along the plane C in such a way as to form two heads 2 in the station 31;
transfer of each head 2 from the station 31 to a respective magazine 43 by the conveyor device 39;
transfer of three columns 11 and two heads 2 from the magazine 42 and the magazines 43 to the assembling station 44 by conveyor devices 46;
assembly of the three columns 11 and the two heads 2 supplied in the station 44;
transfer the three columns 11 and the two heads 2, assembled together in the station 44, to the station 48b by the conveyor device 48b;
welding of the columns 11 to the edges 5b of the spigots 5a of the two heads 2 by two laser welding tools 29 on a first face of the element 1 along the lines B;
transfer of the element 1 from the output of the station 48 to the inverting station 51 by the conveyor device 49;
inversion of the element 1 in the station 51;
transfer of the inverted element 1 to the laser welding station 52 by the conveyor device 53;
welding of the columns 11 to the edges 5b of the spigots 5a of the two heads 2 by two laser welding tools 29 on a second face of the element 1 along the lines B; and
transfer of the element 1 from the output of the station 52 to a discharge station 54 by the conveyor device 55.

From what has been described it will be apparant how the advantages of the present invention are achieved.

In particular there is provided a process which utilises laser technology for welding the various components of the element 1. This gives rise to an undoubted advantage in that the laser welding technology concentrates high power per unit of surface at localised regions on the workpiece; in essence the heating of the zones surrounding the weld lines is practically non-existent so that heat fatiguing of the material is decidedly reduced and the unfavourable consequences on the mechanical characteristics of the workpiece are correspondedly reduced. Moreover, with laser welding technology there are formed weld beads of extremely small thickness (from experimental tests weld beads are in the region of 1mm) so that it is no longer necessary to perform a refinishing working (shearing and lapping). It is also necessary to consider that the laser welding technology allows welding to be achieved at high speed and this technology is by now so developed that systems involving such welding have a high reliability, low maintenance and easily quantifiable operating costs. Finally, it is to be underlined that the system and process which are the subjects of the present invention perform the working cycle entirely automatically with consequent reduction in operating costs.

It can immediately be seen that if stamped blanks were to be considered comprising a single half-head 3, and thus ready to be assembled together in superimposed positions and laser welded; it would be possible to eliminate the cutting station for the body 22 and the corresponding accessory devices, with a large saving in terms of investment, labour, operating costs and, moreover, time necessary for the fulfilment of orders. This has been achieved via the second embodiment of the present invention which will be described hereinafter and which is different from the first embodiment already described solely as regards the part 21 of the system. For this reason the description of the said second embodiment will be directed principally to the new part of the system replacing the part 21, whilst for the remaining parts of the system the same reference numerals will be used to distinguish the corresponding parts described in relation to the first embodiment.

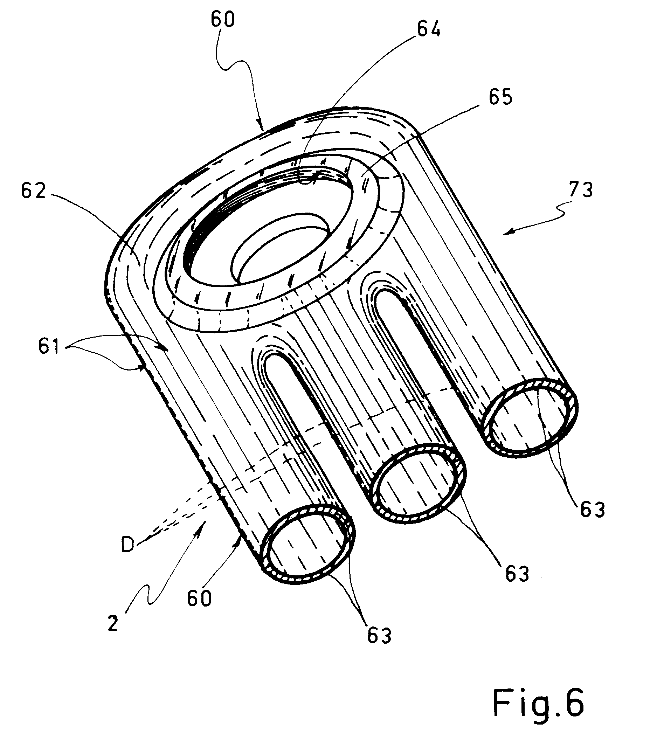

As illustrated in Figure 6, a blank 60 comprises a half-head 61 and a counterpart (see half-head 3 of Figures 2, 3 and 4). Each half-head 61 is defined by a plate 62 (see plate 4 of Figures 2 and 3) which is substantially rectangular and which on three contiguous sides has its perimetral edge rolled in an arc. Along the fourth side of the plate 62 are formed three projections 63 (see projections 5 of Figure 3) parallel to one another. The projections 63 have their longitudinal edges rolled in an arcuate section in such a way that each projection 63 has a semi-cylindrical shape. A through-hole 64 is formed in the plate 62 (see hole 6 of Figures 2 and 3) in correspondence with which, integrally with the plate 62, is formed a tubular sleeve 65 (see tubular sleeve 7 of Figures 2 and 3) which serves for hydraulic communication between the various elements 1 (see Figure 3) of the radiator. Finally, each head 2 comprises a portion defined by the plates 62 of the two half-heads 61 welded together along respective rolled coupling edges D (see A of figures 1 and 4) of the said three contiguous sides, to form spigots defined by the projections 63 of the two half-heads 61 welded together along the rolled edges.

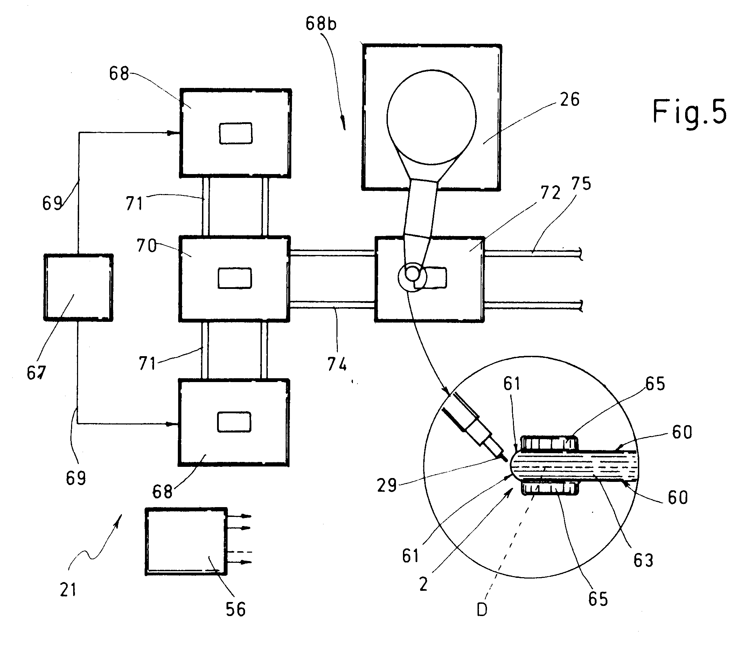

With reference to Figure 5, the reference numeral 21 indicates the first part of a system for the production of radiator elements 1 according to the said preferred embodiment for producing a head 2 by laser welding of two blanks 60.

The part 21 of the system comprises:
a stamping station 67 for producing the blanks 60;
two magazines 68 for blanks 60;
conveyor devices 69 (schematically illustrated) for conveying blanks 60 to the two magazines 68.

The part 21 of the system further includes a station 68b in turn comprising:
a station 70 for assembling two blanks 60, one fed from the first magazine 68 and the other from the second magazine 68;
devices 71 for conveying blanks 60 from the magazines 68 to the station 70;
a laser energy generator 26; and
a laser welding station 72 operable to produce bodies 73 (Figure 6) substantially identical to the heads 2, in which a laser welding tool 29 welds along the edges D of two assembled blanks 60.

The part 21 of the system further includes:
a device 74 for conveying assembled blanks 60 from the station 70 to the welding station 72;
a conveyor device 75 for conveying bodies 73 to the said magazines 43; and, finally,
a central electronic control unit 56 which manages the entire operating cycle and in particular the various operating stations and the workpiece conveyor devices.

In use the process according to the preferred embodiment of the present invention performs the following steps:
produce blanks 60 by stamping in the station 67;
supply blanks 60 to the two magazines 68 by conveyor devices 69;
transfer two blanks 60 from the magazines 68 to the station 70 by conveyor devices 71;
assemble two blanks 60 in the station 70;
transfer two assembled blanks 60 to a laser welding station 72 by conveyor devices 74;
weld the two assembled blanks 60 along the edges D by means of the laser welding tool 29; and
transfer each head 2 formed in the station 72 into a respective magazine 43 (Figure 2) by conveyor devices 75.

Finally, it is clear that the processes and systems described and illustrated here can have modifications and variations introduced thereto without by this departing from the protective ambit of the present invention as defined by the appended claims.

## Claims

1. A process for the production of column radiator elements (1) the said elements (1) comprising two heads (2) and a plurality of columns (11) which connect the heads (2) together in a watertight manner, the process comprising:
a stamping phase to produce first blanks (8, 60) by stamping , each one of which comprises at least a half-head (3) having a first edge (A) for connection to a corresponding first edge (A) of another of the said blanks (8, 60);
a connection step to produce a hollow body (22, 73) comprising at least one said head (2) starting from two said first blanks (8, 60) assembled together; and
a first welding phase to connect two said heads (2) to at least two said columns (11) at respective opposite ends of the columns (11) themselves, each head (2) having a respective second edge (5b) for connecting to a corresponding respective end of each said column (11);
the said connection step comprising the first sub-phase of assembling together two said first blanks (8, 60) in counterposed positions by bringing the said respective first connection edges (A) into coincide with each other; a second sub-phase of welding the said two first blanks (8, 60) along the first connection edges (A) in contact with one another;
characterised in that
said first welding phase and said second sub-phase of welding are two laser welding phases, and in that
said first welding phase comprises the sub-phases of:
welding the said columns (11) to the said two heads (2) along a first half of each of the said second connecting edges (5b) by two laser welding tools (29) on a first face of the said element (1); inverting the said element (1); welding the said columns (11) to the said two heads (2) by means of said laser welding tools (29) on a second face of the said element (1) and along a second half of each of the said second connecting edges (5b).

2. A process according to Claim 1, characterised in that each blank (8) comprises two half-heads (3) disposed in specular positions with respect to one another across a transverse median plane (C), and in that the said hollow body (22) in turn comprises two heads (2) disposed in specular positions with respect to one another across the said transverse median plane (C); the said connection phase comprising a further subphase of cutting the said hollow body (22) along the said transverse median plane (C).

3. A system for the production of column radiator elements (1), each of the said elements (1) being defined by two heads (2) and a plurality of columns (11) which mechanically and hydraulically connect the said heads (2) together, the system comprising a first stamping station (19, 67) for producing first blanks (8, 60) each comprising at least a half-head (3) and each provided with a first connecting edge (A) for connecting to a corresponding first edge (A) of another of said blanks (8, 60); a second station (23b, 68b) comprising a coupling station (24, 70) for producing a second blank comprising a hollow body (22, 73) in turn including at least one said head (2) starting from two said first blanks (8, 60) assembled together the said second station (23, 68b) including means (25, 71) for bringing two said blanks (8, 60) disposed facing one another, into contact along the said respective first connecting edges (A); a third station (44) for positioning two said heads (2) in contact with respective said columns (11), each head (2) having a respective second connecting edge (5b) for connecting to a corresponding respective end of each said column (11); a fourth welding station (48) for welding the said two heads (2) to the respective said columns (11), said fourth station (48) comprising at least two laser welding stations (48b, 52) and at least two laser energy generators (26) each of which is operable to supply a respective laser welding tool (29) coupled to one of the said generators (26) and displaceable along the associated coupling edges (A); the said fourth station (48) furthermore comprising an inverting station (41) for inverting the said element (1) to permit the said two welding tools (29) to act first on one face and then on an opposite face of the said heads (2),; and a fifth welding station (27, 72) for fixedly connecting together the said first connecting edges (A) in contact with one another; the said fifth station (27, 72) being a laser welding station and comprising at least one respective laser energy generator (26) and at least one respective laser welding tool (29) coupled to the said generator (26) and displaceable along the associated coupling edges (A).

4. A system according to Claim 3, characterised in that the said second station (23b) includes cutting means (31) for cutting the said body along a transverse median plane (C) in such a way as to define two said heads (2).

5. A system according to any of Claims 3, or 4, characterised in that it includes conveyor means (69) for transferring the said blanks (8, 60) between the said stamping station (19, 67) and magazines (23, 68); conveyor means (28, 74) for transferring the said hollow bodies (22, 73) from the coupling station (24, 70) to the welding station (27, 72); and conveyor means (45) for carrying the said columns (11) from a respective magazine (42) to the said third station (44).

6. A system according to Claim 5, characterised in that it includes an electronic central control unit (56) for managing the said stations and the said conveyor means in phase with one another.

## Patentansprüche

1. Verfahren zur Herstellung von Säulenheizkörperelementen (1), wobei die Elemente (1) zwei Köpfe (2) und mehrere Säulen (11) umfassen, die die Köpfe (2) wasserdicht miteinander verbinden, wobei das Verfahren folgendes umfaßt:
eine Stanzphase zur Herstellung erster Zuschnitte (8, 60) durch Stanzen, die jeweils mindestens einen Halbkopf (3) mit einem ersten Rand (A) zur Verbindung mit einem dazugehörigen ersten Rand (A) eines anderen der Zuschnitte (8, 60) umfassen;
einen Verbindungsschritt zur Herstellung eines Hohlkörpers (22, 73) mit mindestens einem durch den Zusammenbau zweier erster Zuschnitte (8, 60) gebildeten Kopf (2); und
eine erste Schweißphase zur Verbindung der beiden Köpfe (2) mit mindestens zwei der Säulen (11) an jeweiligen gegenüberliegenden Enden der Säulen (11) selbst, wobei jeder Kopf (2) einen jeweiligen zweiten Rand (5b) zur Verbindung mit einem dazugehörigen jeweiligen Ende jeder der Säulen (11) aufweist;
wobei der Verbindungsschritt die erste Teilphase des Zusammenbauens zweier erster Zuschnitte (8, 60) in einander gegenüber angeordneten Positionen, indem die jeweiligen ersten Verbindungsränder (A) miteinander in Deckung gebracht werden, und eine zweite Teilphase des Miteinanderverschweißens der beiden ersten Zuschnitte (8, 60) entlang den ersten, miteinander in Kontakt stehenden Verbindungsrändern (A), umfaßt;
dadurch gekennzeichnet, daß es sich bei der ersten Schweißphase und der zweiten Teilphase des Schweißens um zwei Laserschweißphasen handelt und daß die erste Schweißphase die folgenden Teilphasen umfaßt:
Verschweißen der Säulen (11) mit den beiden Köpfen (2) entlang einer ersten Hälfte jedes der zweiten Verbindungsränder (5b) durch zwei Laserschweißwerkzeuge (29) auf einer ersten Fläche des Elements (1); Umdrehen des Elements (1); Verschweißen der Säulen (11) mit den beiden Köpfen (2) mittels der Laserschweißwerkzeuge (29) an einer zweiten Fläche des Elements (1) und entlang einer zweiten Hälfte jedes der zweiten Verbindungsränder (5b).

2. Verfahren nach Anspruch 1, dadurch gekennzeichnet, daß jeder Zuschnitt (8) zwei Halbköpfe (3) umfaßt, die spiegelsymmetrisch zueinander über eine mittlere Querebene (C) angeordnet sind, und daß der Hohlkörper (22) wiederum zwei Köpfe (2) umfaßt, die spiegelsymmetrisch zueinander über die mittlere Querebene (C) angeordnet sind, wobei die Verbindungsphase eine weitere Teilphase des Schneidens des Hohlkörpers (22) entlang der mittleren Querebene (C) umfaßt`

3. Anlage zur Herstellung von Säulenheizkörperelementen (1), wobei jedes der Elemente (1) durch zwei Köpfe (2) und mehrere Säulen (11), die die Köpfe (2) mechanisch und hydraulisch miteinander verbinden, definiert wird, wobei die Anlage folgendes umfaßt: eine erste Stanzstation (19, 67) zur Herstellung erster Zuschnitte (8, 60), die jeweils mindestens einen Halbkopf (3) umfassen und jeweils mit einem ersten Verbindungsrand (A) zur Verbindung mit einem dazugehörigen ersten Rand (A) eines anderen der Zuschnitte (8, 60) versehen sind; eine zweite Station (23b, 68b) mit einer Verbindungsstation (24, 70) zur Herstellung eines zweiten Zuschnitts, der einen Hohlkörper (22, 73) umfaßt, der wiederum mindestens einen durch den Zusammenbau zweier der ersten Zuschnitte (8, 60) gebildeten Kopf (2) enthält, wobei die zweite Station (23, 68b) Mittel (25, 71) zum Miteinanderinkontaktbringen zweier zueinanderweisend angeordneter Zuschnitte (8, 60) entlang den jeweiligen ersten Verbindungsrändern (A) enthält; eine dritte Station (44) zur Positionierung zweier Köpfe (2) in Kontakt mit den jeweiligen Säulen (11), wobei jeder Kopf (2) einen jeweiligen zweiten Verbindungsrand (5b) zur Verbindung mit einem jeweiligen dazugehörigen Ende jeder Säule (11) aufweist; eine vierte Schweißstation (48) zum Verschweißen der beiden Köpfe (2) mit den jeweiligen Säulen (11), wobei die vierte Station (48) mindestens zwei Laserschweißstationen (48b, 52) und mindestens zwei Laserenergieerzeuger (26) umfaßt, die jeweils zur Versorgung eines jeweiligen Laserschweißwerkzeugs (29), das mit einem der Generatoren (26) verbunden und entlang den dazugehörigen Verbindungsrändern (A) verschiebbar ist, betrieben werden können; wobei die vierte Station (48) darüber hinaus eine Umdrehstation (41) zum Umdrehen des Elements (1), um zu gestatten, daß die beiden Schweißwerkzeuge (29) zunächst auf eine Fläche und dann auf eine gegenüberliegende Fläche der Köpfe (2) wirken, umfaßt; und eine fünfte Schweißstation (27, 72) zum festen Miteinanderverbinden der miteinander in Kontakt stehenden ersten Verbindungsränder (A); wobei es sich bei der fünften Station (27, 72) um eine Laserschweißstation handelt, die mindestens einen jeweiligen Laserenergieerzeuger (26) und mindestens ein jeweiliges Laserschweißwerkzeug (29), das mit dem Generator (26) verbunden ist und enlang den dazugehörigen Verbindungsrändern (A) verschiebbar ist, umfaßt.

4. Anlage nach Anspruch 3, dadurch gekennzeichnet, daß die zweite Station (23b) ein Schneidmittel (31) zum Schneiden des Körpers entlang einer mittleren Querebene (C) derart, daß zwei Köpfe (2) definiert werden, enthält.

5. Anlage nach Anspruch 3 oder 4, dadurch gekennzeichnet, daß sie Fördermittel (69) zur Überführung der Zuschnitte (8, 60) zwischen der Stanzstation (19, 67) und den Magazinen (23, 68); Fördermittel (28, 74) zur Überführung der Hohlkörper (22, 73) von der Verbindungsstation (24, 70) zur Schweißstation (27, 72); und Fördermittel (45) zur Beförderung der Säulen (11) von einem jeweiligen Magazin (42) zu der dritten Station (44) enthält.

6. Anlage nach Anspruch 5, dadurch gekennzeichnet, daß es eine elektronische zentrale Steuereinheit (56) zur Verwaltung der Stationen und der Fördermittel in Takt miteinander enthält.

## Revendications

1. Procédé de production d'éléments de radiateur à colonnes (1), lesdits éléments (1) comprenant deux têtes (2) et une pluralité de colonnes (11) qui se raccordent ensemble sur les têtes (2) d'une manière étanche à l'eau, le procédé comprenant:
une phase d'emboutissage destinée à produire des premières ébauches (8, 60) par emboutissage, chacune d'entre elles comprenant au moins une demi-tête (3) présentant un premier bord (A) pour assurer la liaison avec un premier bord (A) correspondant d'une autre desdites ébauches (8, 60);
une étape de liaison destinée à produire un corps creux (22, 73) comprenant au moins une desdites têtes (2) démarrant à partir de deux desdites premières ébauches (8, 60) assemblées; et
une première phase de soudage destinée à raccorder deux desdites têtes (2) sur au moins deux desdites colonnes (11) aux extrémités opposées respectives des colonnes (11) elles-mêmes, chaque tête (2) comprenant un second bord (5b) respectif destiné à se raccorder sur une extrémité respective correspondante de chacune desdites colonnes (11);
ladite étape de liaison comprenant la première sous-phase d'assemblage de deux desdites premières ébauches (8, 60) dans des positions opposées en amenant lesdits premiers bords de liaison (A) respectifs à coïncider l'un avec l'autre; une deuxième sous-phase de soudage desdites deux premières ébauches (8, 60) le long des premiers bords de liaison (A) en contact l'un avec l'autre;
caractérisé en ce que ladite première phase de soudage et ladite deuxième sous-phase de soudage sont deux phases de soudage au laser, et en ce que ladite première phase de soudage comprend les sous-phases de:
soudage desdites colonnes (11) sur lesdites deux têtes (2) le long d'une première moitié de chacun desdits seconds bords de liaison (5b) par deux outils de soudage au laser (29) sur une première face dudit élément (1); retournement dudit élément (1); soudage desdites colonnes (11) sur lesdites deux têtes (2) au moyen desdits outils de soudage au laser (29) sur une seconde face dudit élément (1) et le long d'une seconde moitié de chacun desdits seconds bords de liaison (5b).

2. Procédé selon la revendication 1, caractérisé en ce que chaque ébauche (8) comprend deux demi-têtes (3) disposées à des emplacements symétriques l'un de l'autre par rapport à un plan médian transversal (C), et en ce que ledit corps creux (22) comprend aussi deux têtes (2) disposées à des emplacements symétriques l'un de l'autre par rapport à audit plan médian transversal (C); ladite phase de liaison comprenant une autre sous-phase de découpe dudit corps creux (22) le long dudit plan médian transversal (C).

3. Dispositif de production d'éléments de radiateur à colonnes (1), chacun desdits éléments (1) étant défini par deux têtes (2) et une pluralité de colonnes (11) qui sont assemblées mécaniquement et hydrauliquement auxdites têtes (2), le dispositif comprenant un premier poste d'emboutissage (19; 67) destiné à produire des premières ébauches (8, 60), chacune comprenant au moins une demi-tête (3) et chacune présentant un premier bord de liaison (A) afin d'assurer une liaison avec un premier bord (A) correspondant d'une autre desdites ébauches (8, 60); un deuxième poste (23b, 68b) comprenant un poste de liaison (24, 70) destiné à produire une deuxième ébauche présentant un corps creux (22, 73) comportant à son tour au moins une dite tête (2) démarrant à partir de deux desdits premières ébauches (8, 60) assemblées, ledit deuxième poste (23, 68b) comprenant des moyens (25, 71) destinés à amener deux desdites ébauches (8, 60), disposées en regard l'une par rapport à l'autre, en contact le long desdits premiers bords de liaison (A) respectifs; un troisième poste (44) destiné à positionner deux desdites têtes (2) en contact par rapport auxdites colonnes (11), chaque tête (2) présentant un second bord de liaison (5b) respectif afin d'assurer la liaison avec une extrémité respective correspondante de chacune desdites colonnes (11); un quatrième poste de soudage (48) destiné à souder lesdites deux têtes (2) auxdites colonnes (11) respectives, ledit quatrième poste (48) comprenant au moins deux postes de soudage au laser (48b, 52) et au moins deux générateurs d'énergie laser (26), chacun d'entre eux pouvant être commandé de manière à alimenter un outil de soudage au laser respectif (29) couplé à l'un desdits générateurs (26) et pouvant être déplacé le long des bords de liaison (A) associés; ledit quatrième poste (48) comprenant, en outre, un poste de retournement (41) destiné à retourner ledit élément (1) pour permettre auxdits deux outils de soudage (29) d'agir en premier sur une face et ensuite sur une face opposée desdites têtes (2), et un cinquième poste de soudage (27, 72) destiné à raccorder de manière permanente lesdits premiers bords de liaison (A) en contact l'un sur l'autre; ledit cinquième poste (27, 72) étant un poste de soudage au laser et comprenant au moins un générateur d'énergie laser (26) respectif et au moins un outil de soudage au laser (29) respectif couplé audit générateur (26) et pouvant se déplacer le long desdits bords de liaison (A) associés.

4. Dispositif selon la revendication 3, caractérisé en ce que ledit deuxième poste (23b) comprend un moyen de découpage (31) destiné à découper ledit corps le long d'un plan médian transversai (C) de manière à définir deux desdites têtes (2).

5. Dispositif selon l'une quelconque des revendications 3 ou 4, caractérisé en ce qu'il comprend un moyen de transfert (69) destiné à transférer lesdites ébauches (8, 60) entre ledit poste d'emboutissage (19, 67) et des magasins (23, 68); un moyen de transfert (28, 74) destiné à transférer lesdits corps creux (22, 73) du poste de liaison (24, 70) vers le poste de soudage (27, 72); et un moyen de transfert (45) destiné à transporter lesdites colonnes (11) d'un magasin (42) respectif vers ledit troisième poste (44).

6. Dispositif selon la revendication 5, caractérisé en ce qu'il comporte une unité centrale de commande électronique (56) afin de commander lesdits postes et lesdits moyens de transfert en phase l'un avec l'autre.
